# EUROPÄISCHE PATENTSCHRIFT

(11) **EP 0 383 362 B1**
(45) Veröffentlichungstag und Bekanntmachung des Hinweises auf die Patenterteilung: **15.09.1993**
(21) Anmeldenummer: 90105784.4
(22) Anmeldetag: 20.05.1988
(51) Int. Cl.: E21F 15/00, E21D 23/04

(54) **Vorrichtung zum Verfüllen von bergmännisch hergestellten Hohlräumen, insbesondere im Steinkohlenbergbau**
Method for backfilling underground excavations, in particular in coal mines
Méthode de remblayage de cavités souterraines, en particulier dans des mines de charbon

(30) Priorität: 03.06.1987 DE 3718512; 16.06.1987 DE 3720080
(43) Veröffentlichungstag der Anmeldung: 22.08.1990
(62) Teilanmeldung aus: 88108094.9
(73) Patentinhaber: DPU DEUTSCHE PROJEKT UNION GMBH, 45128 Essen (DE)
(72) Erfinder: Schick, Gilbert Dietrich, Dipl., Ing., D-5120 Herzogenrath (DE)
(74) Vertreter: von Rohr, Hans Wilhelm, Dipl.-Phys.

(56) Entgegenhaltungen:
- DE-A- 1 951 117
- DE-B- 2 549 985
- FR-A- 2 468 724
- GB-A- 1 484 568
- GB-A- 1 514 751

## Beschreibung

Die Erfindung betrifft eine Vorrichtung zum Verfüllen von bergmännisch hergestellten Hohlräumen, insbesondere im Steinkohlenbergbau, nach dem Oberbegriff von Anspruch 1.

Aus der Versatztechnik sind verschiedene Vorrichtungen bekannt, die eine Verfüllung von Hohlräumen mit Verfüllungsmaterial erlauben.

Bei dem Ausgangspunkt für die Lehre der Erfindung (DE-A 2 943 748) ist die Arbeitsrichtung für eine entsprechende Vorrichtung die Richtung des Abbaufortschrittes. Etwa quer zu der Richtung des Abbaufortschrittes, also in Querrichtung, erstreckt sich eine aus mehreren Versatzwandabschnitten bestehende Versatzwand, auf deren der Strebfront zugewandten Seite eine quer zur Richtung des Abbaufortschrittes verlaufende Förderleitung angeordnet ist. Das Verfüllen mit Verfüllungsmaterial erfolgt hier so, daß der jeweils letzte Versatzwandabschnitt zur Strebfront hin nachgezogen wird und durch das dann offene Ende der Förderleitung Verfüllungsmaterial in den neu gebildeten Versatzraum eingeblasen wird. Ist dieser Versatzraum einigermaßen gefüllt, so wird der nächste Versatzwandabschnitt nachgezogen und erneut Verfüllungsmaterial in den weiter gebildeten neuen Versatzraum eingeblasen. So entsteht schrittweise in Querrichtung ein neuer, sich über die Breite des Verfüllungsbereiches erstreckender Streifen aus Verfüllungsmaterial. Die einzelnen Versatzwandabschnitte sind im wesentlichen ebene Platten. Folglich sind die Versatzräume hinter den Versatzwandabschnitten seitlich nicht begrenzt. Daraus wieder folgt, daß beim Einbringen des Verfüllungsmaterials aus der Förderleitung der jeweilige Versatzraum zu einer Seite hin offen ist. Das Verfüllungsmaterial würde also ungehindert aus dem Versatzraum herausdringen, wenn man nicht nur im entferntesten Randbereich des Versatzraumes Verfüllungsmaterial einbringen würde. Verfahrenstechnisch ist es so praktisch unmöglich, das Verfüllungsmaterial bis zur Berührung des Hangenden einzubringen. Selbst wenn es einem gelänge, das Verfüllungsmaterial etwa bis zur Berührung des Hangenden einzubringen, ergäbe sich ein gerader Verlauf der die Versatzräume begrenzenden Kanten mit der Gefahr des Abreißens der Dachschichten. Schließlich gehen die einzelnen Abschnitte des Verfüllungsmaterials übergangslos ineinander über, so daß eine Einbringung von Rückstands- und Abfallstoffen nur völlig homogen, also unterschiedslos über die volle Breite des Verfüllungsbereichs möglich ist.

Im übrigen ist eine Vorrichtung zum Verfüllen von bergmännisch hergestellten Hohlräumen bekannt (DE-B 2 549 486), mit der es möglich ist, in Querrichtung eindeutig begrenzte Abschnitte entstehen zu lassen, ohne daß im Ergebnis die durchlaufende streifenartige Füllung des bergmännisch hergestellten Hohlraums aufgegeben wird. Dazu wird eine einteilige Versatzwand, d. h. eingentlich ein Versatzwandabschnitt, der in Draufsicht L-förmig ausgebildet ist, in Querrichtung verrückt. Ist ein so hergestellter Versatzabschnitt verfestigt, so wird die Versatzwand in Querrichtung um einen Abschnitt seitlich verrückt, so daß in den gebildeten neuen Versatzraum, der seitlich durch den L-Schenkel der Versatzwand begrenzt ist, wieder Verfüllungsmaterial eingebracht werden kann. Diese Vorrichtung arbeitet langsam, da sie erst dann in Querrichtung weiter vorgerückt werden kann, wenn der vorherige Versatzabschnitt verfestigt ist.

Je früher und dichter das Verfüllungsmaterial eingebracht werden kann, desto zweckmäßiger ist es, da das Gebirge frühzeitig gestützt und in seinem ursprünglichen Verband gehalten werden kann. Hierzu ist es bekannt, Stützpfeiler aus Zement mit Hilfe einer im Querschnitt U-förmigen Gleitschaltung in einem bergmännisch hergestellten Hohlraum auszuformen (GB-A 1 484 568). Für einen breiten Versatzraum, der durchgehend verfüllt werden soll, könnte man zwar auf die Idee kommen, mehrere dieser Gleitschalungen nebeneinander anzuordnen, es zeigt sich dann aber, daß seitlich Freiräume zwischen jeweils zwei Gleitschalungen verbleiben, die ein Durchtreten des Verfüllungsmaterials erlauben.

Bei einer weiter bekannten Vorrichtung zum Verfüllen von bergmännisch hergestellten Hohlräumen im Blasversatz (DE-A 1 951 117) ist es bekannt, eine quer zum Streb und parallel zum Hangenden und Liegenden verlaufende durchgehende Versatzwand aus einer mehrteiligen Formplatte aus elastischem Material vorzusehen. Die zum Hangenden und Liegenden abgebogenen Enden der Formplatte gleiten am Hangenden und Liegenden abdichtend, so daß der Versatzraum vor der Versatzwand durchgehend abgedichtet ist. Eine aus mehreren Versatzwandabschnitten bestehende Versatzwand ist hier nicht offenbart.

Schließlich ist es für sich bekannt, bei einer mehrteiligen Unterstützungsvorrichtung für das Hangende im untertägigen Bergbau zwischen den einzelnen Teilen flexible, der Bewegung der Teile folgende Abdichtschürzen vorzusehen (GB-A 1 514 751).

Der Erfindung liegt die Aufgabe zugrunde, die eingangs erläuterte, bekannte Vorrichtung so auszugestalten und weiterzubilden, daß mit ihr das Verfüllungsmaterial schnell und wirkungsvoll in einzelnen, voneinander getrennten Versatzabschnitten besonders nahe an der Abbaufront eingebracht und verdichtet werden kann.

Die zuvor aufgezeigte Aufgabe ist bei einer Vorrichtung mit den Merkmalen des Oberbegriffs von Anspruch 1 durch die Merkmale des kennzeichnenden Teils von Anspruch 1 gelöst.

Wesentlich ist zunächst, daß in Querrichtung eindeutig begrenzte Abschnitte entstehen, ohne daß im Ergebnis die durchlaufende, streifenartige Füllung des bergmännisch hergestellten Hohlraumes aufgegeben wird. Die erfindungsgemäße Ausbildung der Versatzwand macht es dabei möglich, frühzeitig nach dem Vorrücken, z. B. eines Ausbaugestells den zugehörigen Versatzwandabschnitt ebenfalls vorzurücken und den von diesem Versatzwandabschnitt umschlossenen Versatzraumabschnitt durch Einleiten von hydraulisch abbindendem Verfüllungsmaterial bis unter das Hangende weitestgehend dicht zu verfüllen. Dies liegt daran, daß die Versatzraumabschnitte allseitig eng umschlossen sind, nämlich einerseits durch den Abschnitt des jeweils vorher entstandenen Streifens, andererseits durch den entsprechenden Versatzwandabschnitt. Unmittelbar hinter dem Ausbaugestell werden so pfeilerartig geformte Abschnitte gebildet, die den sich absenkenden Dachschichten sofort einen hohen Widerstand entgegensetzen.

Diese Abschnitte sind auch weitestgehend scherfest, so daß sie bankparallelen Verschiebebewegungen der Dachschichten einen ausreichenden Widerstand entgegensetzen. Dadurch, daß sich die pfeilerartigen Abschnitte zunächst in Arbeitsrichtung verjüngen, ergibt sich keine geradlinige Kante zwischen dem sehr stark unterstützten Bereich und dem weniger stark unterstützten Bereich. Es ergibt sich hingegen ein allmählicher Übergang zwischen diesen Bereichen. Dadurch ist die Gefahr des Abreißens der Dachschichten entlang der Begrenzung des offengehaltenen Hohlraums, insbesondere also des Strebraums, erheblich verringert.

Ein weiterer Vorteil der sich verjüngenden, pfeilerartigen Abschnitte besteht darin, daß diese die Versatzwand beim Rücken nicht behindern. Auch Seitenbewegungen der Ausbaugestelle sind nach entsprechender Abstandsgewinnung von dem verfestigten Abschnitt möglich.

Dadurch, daß die benachbarten Versatzwandabschnitte an den freien Enden mindestens über die Schrittlänge des Ausbaugestells gleitend aneinander anliegen und die Außenbreite an den freien Enden größer ist als im übrigen, während die maximale lichte Innenbreite dort ebenfalls größer ist als im übrigen, ergibt sich bei schrittweisem Arbeiten der Effekt, daß der pfeilerartige, schon verfestigte Abschnitt nach Wegrücken des Versatzwandabschnittes und erneutem Einleiten.von Verfüllungsmaterial zu einem im wesentlichen rechteckigen Abschnitt ergänzt wird, der seitlich von den Außenseiten der benachbarten Versatzwandabschnitte begrenzt ist. Dadurch ergibt sich nach vollständiger Ausführung eines Schrittes über die gesamte Breite der Versatzwand in Querrichtung eine durchgehende, abstandslose Verfüllung des Hohlraums mit Verfüllungsmaterial. Dabei kann das Nachziehen der Versatzwandabschnitte praktisch ohne Behinderung durch schon verfestigte Abschnitte des Verfüllungsmaterials erfolgen, was auf die geschickte Gestaltung der Abmessungen der Versatzwandabschnitte zurückzuführen ist.

Erfindungsgemäß wird also einerseits eine sehr frühzeitige, besonders sichere Abstützung des Hangenden durch die pfeilerartigen Abschnitte erreicht, andererseits werden die noch verbleibenden Zwischenräume zwischen den pfeilerartigen Abschnitten jeweils schrittweise in besonders geschickter Weise nachverfüllt, so daß sich im Ergebnis ein vollständig und kompakt ausgefüllter Hohlraum ergibt.

Die erfindungsgemäß ausgestaltete Vorrichtung ist auch einsetzbar, wenn in einem so schmalen, bergmännisch hergestellten Hohlraum gearbeitet wird, daß nur ein einziger Versatzwandabschnitt vorgesehen ist. Die dann gleitend und dichtend an den Seiten des Hohlraums anliegenden freien Enden des Versatzwandabschnittes ergeben ebenfalls die lückenlose, vollständige und kompakte Ausfüllung des bergmännisch hergestellten Hohlraumes.

Bevorzugte Ausgestaltungen und Weiterbildungen der Vorrichtung nach Anspruch 1 ergeben sich aus den dem Anspruch 1 nachgeordneten Ansprüchen.

Im übrigen werden bevorzugte Ausgestaltungen und Weiterbildungen der Erfindung in Verbindung mit der Erläuterung von Ausführungsbeispielen anhand der Zeichnung näher erläutert. In der Zeichnung zeigt
- Fig. 1: schematisch, in Draufsicht, ausschnittweise, ein Ausführungsbeispiel einer erfindungsgemäßen Vorrichtung,
- Fig. 2: den Gegenstand aus Fig. 1 in einer Seitenansicht und
- Fig. 3: schematisch in Draufsicht ein Ausführungsbeispiel einer aus mehreren Versatzwandabschnitten gemäß Fig. 1 bestehenden Vorrichtung, wobei die einzelnen Versatzwandabschnitte sich in unterschiedlichen Schrittpositionen befinden.

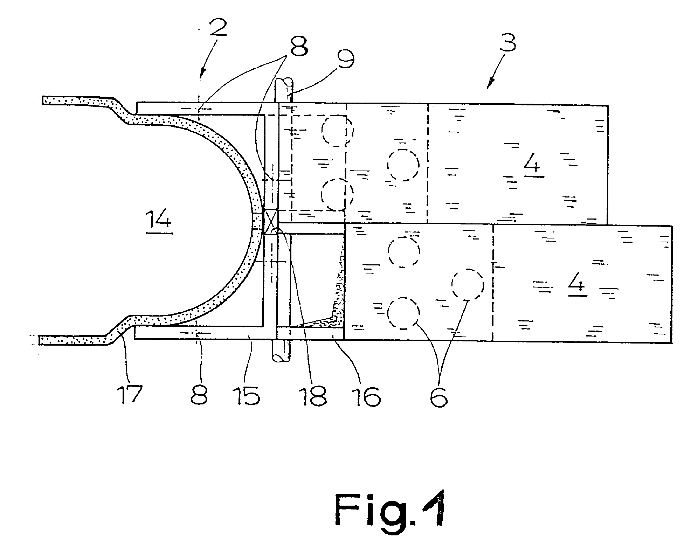

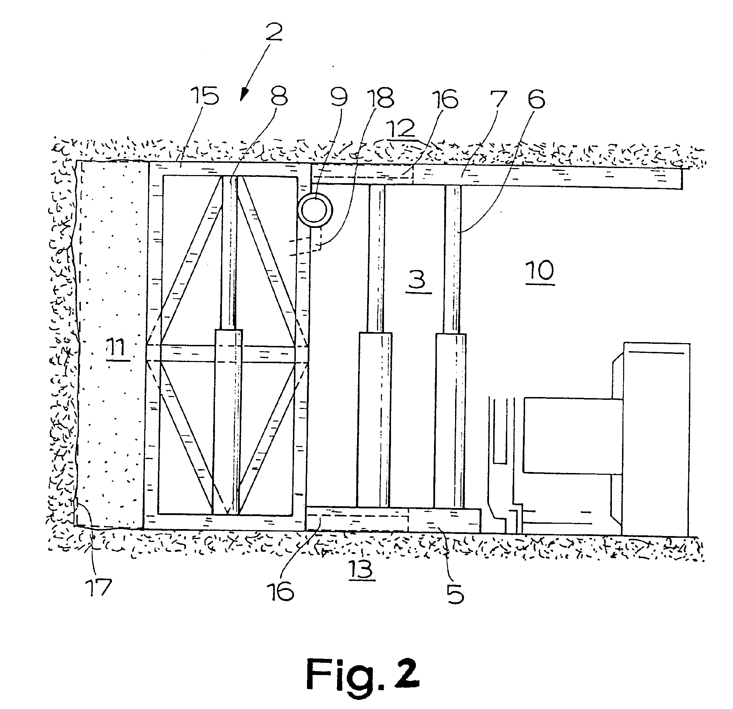

Fig. 1 zeigt ein bevorzugtes Ausführungsbeispiel einer erfindungsgemäßen Vorrichtung zum Verfüllen von bergmännisch hergestellten Hohlräumen insbesondere im Steinkohlenbergbau, mit einem Verfüllungsmaterial mit im Endzustand dichter Gefügestruktur und hoher, vorzugsweise schnell eintretender Verfestigung. Fig. 1 zeigt dabei einen Versatzwandabschnitt 2 der Vorrichtung, von denen diese Vorrichtung mehrere nebeneinander angeordnet aufweist. Dem Versatzwandabschnitt 2 ist ein Ausbaugestell 3 zugeordnet. Das Ausbaugestell 3 besteht in dem hier dargestellten Ausführungsbeispiel aus zwei Ausbauböcken 4, die zu einem Bockgespann in bekannter Art und Weise untereinander oder mit einem Förderer durch Rückzylinder verbunden sind, so daß das Ausbaugestell 3 dem Abbaufortschritt entsprechend vorrücken kann. Jeder Ausbaubock 4 des Ausbaugestells 3 besteht im hier dargestellten Ausführungsbeispiel aus einer Sohlplatte 5, drei Hydraulikstempeln 6 und einer Kappe 7. Das ergibt sich aus Fig. 1 in Verbindung mit Fig. 2 sehr deutlich. Angedeutet in Fig. 1 und eingezeichnet in Fig. 2 sind des weiteren Spannstempel 8, die dem Versatzwandabschnitt 2 zugeordnet sind, hier insgesamt vier Spannstempel 8. Weiter ist erkennbar eine als Förderleitung 9 ausgeführte Fördereinrichtung für Verfüllungsmaterial. Die maschinentechnische Ausführung der Maßnahmen zur Stabilisierung zwischen Sohlplatte und Kappe kann in bekannter Weise wie bei Bockgespannen und/oder bei Schilden mit Viergelenkgetrieben erfolgen.

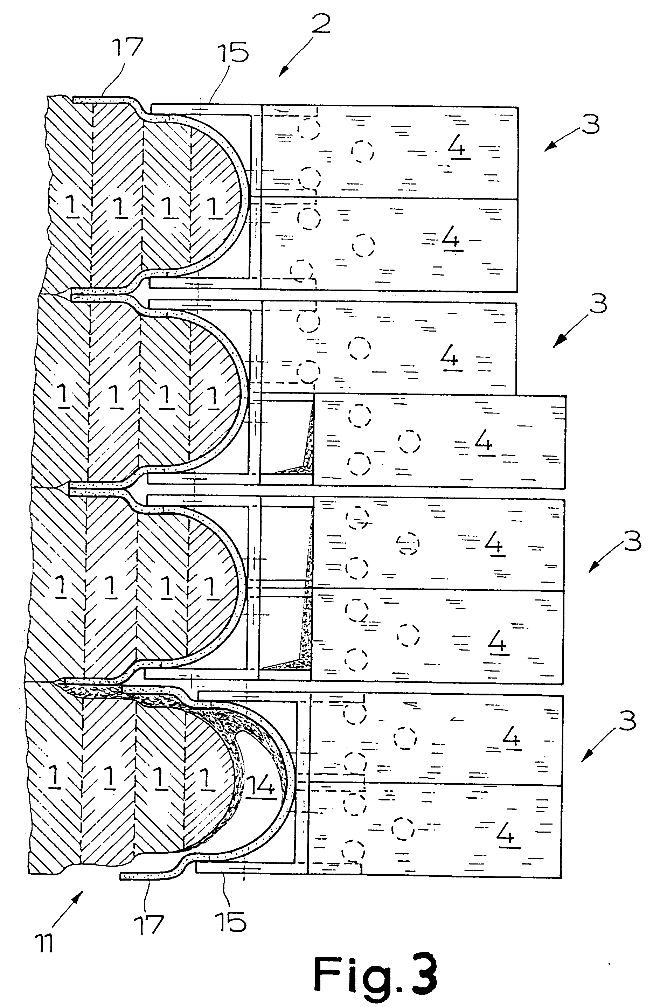

Fig. 3 macht deutlich, daß die Versatzwandabschnitte 2 gemeinsam eine durchgehende, den offengehaltenen Hohlraum, insbesondere den Strebraum 10, gegen einen mit Verfüllungsmaterial zu verfüllenden Versatzraum 11 abgrenzende Versatzwand bilden. In Fig. 2 sind der Strebraum 10 und der Versatzraum 11, letzterer schon mit Verfüllungsmaterial verfüllt,eingezeichnet.

Im hier dargestellten Ausführungsbeispiel sind die Ausbaugestelle 3 der Vorrichtung selbstvorrückend und die Versatzwandabschnitte 2 sind nachziehbar und höhenverstellbar und, mittels der Spannstempel 8, zum Hangenden 12 und Liegenden 13 (Fig. 2) verspannbar. Eine solche Vorrichtung eignet sich insbesondere für die Durchführung eines Verfahrens nach dem Stammpatent 0 293 686.

Interessant ist nun, daß, wie Fig. 1 und 3 deutlich zeigen, jeder Versatzwandabschnitt 2 im Querschnitt U-förmig ausgebildet ist und versatzseitig offenen, sich in Rückrichtung- Arbeitsrichtung - verjüngenden Versatzraumabschnitt 14 umschließt und daß die freien Enden benachbarter Versatzwandabschnitte 2 mindestens über die Schrittlänge des Ausbaugestells 3 gleitend und dichtend aneinander anliegen und daß die Außenbreite und die maximale lichte Innenbreite der Versatzwandabschnitte 2 an den gleitend aneinander anliegenden freien Enden größer ist als im übrigen.

Die Fig. 1 bis 3 zeigen insoweit ein besonders bevorzugtes Ausführungsbeispiel der Erfindung als jeder Versatzwandabschnitt 2 einen Stützrahmen 15 und eine am Stützrahmen 15 befestigte, der Kontur des Versatzwandabschnittes 2 entsprechende, einteilige oder mehrteilige Formplatte 17 aus elastischem Material aufweist und als die gleitend aneinander anliegenden freien Enden der Versatzwandabschnitte 2 von den Enden der Formplatten 17 gebildet sind. Das elastische Material ist zweckmäßigerweise ein gummiartiges Material, obwohl auch bestimmte Kunststoffe heutzutage schon entsprechende Eigenschaften aufweisen. Wesentlich ist, daß sich auf diese Weise eine flexible Konstruktion ergibt, die einerseits ausreichend fest ist, um die von dem noch nicht verfestigten Verfüllungsmaterial ausgeübten Kräfte aufzunehmen, die aber andererseits ausreichend beweglich ist, sich nach Verfestigung des Verfüllungsmaterials leicht von dem pfeilerartigen Verfüllungsmaterial zu lösen. Die im Bereich der freien Enden unmittelbar gleitend aneinander liegenden Formplatten aus elastischem Material schaffen auf einfache Weise eine hinreichend dichte Abgrenzung zum benachbarten pfeilerartigen Verfüllungsmaterial hin. Darüberhinaus gestatten diese Enden die im allgemeinen Teil der Beschreibung erläuterte lückenlose Verfüllung im Grenzbereich zum benachbarten Pfeiler auf besonders zweckmäßige Weise ohne zusätzliche Maßnahmen.

In den Fig. 1 und 3 ist dargestellt, daß es sich hier um eine einteilige Formplatte 17 aus elastischem Material handelt. Grundsätzlich könnte ebensogut auch eine mehrteilige Formplatte verwendet werden, wenn dies aus konstruktiven Gründen zu bevorzugen wäre. Eine Alternative besteht auch darin, daß der Stützrahmen im Querschnitt etwa U-förmig ausgebildet ist und daß die Formplatte aus elastischem Material aus zwei, lediglich die freien Enden bildenden, am Stützrahmen befestigten Teilen besteht. Hier kann die "Form" für den pfeilerartigen Abschnitt großteilig aus verschleißfestem Metall des Stützrahmens bestehen, so daß nur die für die Gleitabdichtung erforderlichen Enden aus elastischem und damit verschleißgefährdeterem Material bestehen.

Bei der zuvor erläuterten Ausgestaltung der Versatzvorrichtung mit einer Formplatte 17 aus elastischem Material werden die oben erläuterten Breitenverhältnisse dadurch realisiert, daß die Außenbreite des Stützrahmens 15 geringer ist als die Außenbreite der Formplatte 17 an den freien Enden und die maximale Innenbreite des Versatzwandabschnittes 2 im Bereich des Stützrahmens 15 geringer ist als an den freien Enden der Formplatte 17.

Generell gilt, daß der Stützrahmen 15 zweckmäßigerweise an den Spannstempeln 8 befestigt sein kann. Der Stützrahmen 15 ist zweckmäßigerweise mit Hilfe der Spannstempel 8 höhenverstellbar und zwischen dem Hangenden 12 und dem Liegenden 13 verspannbar. Dabei sollte die Konstruktion so getroffen sein, daß sich die am Stützrahmen 15 befestigte Formplatte 17 gleichzeitig mit verformt und so dichtend am Hangenden 12 und Liegenden 13 anliegt. Der Stützrahmen 15 ist mittels geeigneter Rückeinrichtungen 16 an die Sohlplatten 5 und die Kappen 7 des Ausbaugestells 3 angeschlossen und kann nach dem Rücken des Ausbaugestells 3 mit Hilfe dieser Rückeinrichtungen 16 zu einem geeigneten Zeitpunkt nachgezogen werden. Die Rückeinrichtungen 16 können auch zum Vorrücken des Ausbaugestells 3 dienen, wobei der verfestigte Abschnitt 1 als Widerlager dient.

In den Figuren ist lediglich angedeutet, daß jeder Versatzwandabschnitt 2 mindestens eine Öffnung 18 zur Aufnahme der Förderleitung 9 bzw. einer der Förderleitung für Verfüllungsmechanik aufweist, wobei hier lediglich eine gemeinsame, quer zur Rückrichtung - Arbeitsrichtung - verlaufende Förderleitung 9 vorgesehen ist.

Fig. 3 zeigt anhand einer Vorrichtung mit insgesamt vier Versatzabschnitten 2 die Arbeitsweise der erfindungsgemäßen Vorrichtung. Der in Fig 3 oben dargestelle Versatzwandabschnitt 2 befindet sich in Grundstellung nach Ausbildung des pfeilerartigen Abschnittes 1. Der in Fig. 3 darunter befindliche Versatzwandabschnitt 2 zeigt einen Ausbaubock 4 des zugehörigen Ausbaugestells dem Abbaufortschritt folgend vorgerückt, beim darunter befindlichen Versatzwandabschnitt 2 sind beide Ausbauböcke 4 des Ausbaugestells 3 vorgerückt. In Fig. 3 unten ist ein Versatzwandabschnitt 2 gezeigt, der dem vorgerückten Ausbaugestell 3 folgend schon nachgezogen worden ist, so daß zwischen dem stehengebliebenen, bereits verfestigten, pfeilerartigen Abschnitt 1 und dem vorgerückten Versatzwandabschnitt 2 ein neuer, mit Verfüllungsmaterial zu verfüllender Versatzraumabschnitt 14 entstanden ist. Hier ist angedeutet, daß Verfüllungsmaterial soeben eingeleitet wird und es ist zu erkennen, wie sich einerseits ein neuer pfeilerartiger Abschnitt 1 bildet, andererseits der zwischen dem schon gebildeten Abschnitt 1 und dem benachbarten Versatzwandabschnitt 2 bestehende Hohlraum nachverfüllt wird. Fig. 3 macht besonders deutlich, daß sich bei Einsatz der erfindungsgemäßen Vorrichtung einerseits sehr frühzeitig tragfeste pfeilerartige Abschnitte 1 ergeben, andererseits letztlich ein insgesamt homogen verfüllter Hohlraum verbleibt.

Die erfindungsgemäße, zuvor erläuterte Vorrichtung ist besonders geeignet, um nach dem im Stammpatent 0 293 686 erläuterten Verfahren abschnittsweise unterschiedlich Verfüllungsmaterial mit oder, ohne (industrielle) Rückstandsund Abfallstoffe in einen Hohlraum einzubringen. Insbesondere das dort vorgeschlagene schachbrettartige Einbringen läßt sich durch die erfindungsgemäße Vorrichtung besonders zweckmäßig verwirklichen.

Die erfindungsgemäße Vorrichtung kann z. B. eine Gesamtlänge von ca. 4.500 mm aufweisen statt der früher üblichen ca. 6.000 mm. Die Tiefe der Formplatte kann dabei ca. 2.400 mm betragen mit einem Endüberstand von 800 mm und entsprechender Schrittweite.

## Patentansprüche

1. Vorrichtung zum Verfüllen von bergmännisch hergestellten Hohlräumen, insbesondere im Steinkohlenbergbau, mit einem Verfüllungsmaterial mit im Endzustand dichter Gefügestruktur und hoher, vorzugsweise schnell eintretender Verfestigung, mit einer durchgehenden, den offengehaltenen Hohlraum, insbesondere Strebraum (10), gegen einen mit Verfüllungsmaterial zu verfüllenden Versatzraum (11) abgrenzenden Versatzwand, vorzugsweise mit Ausbaugestellen (3) und Spannstempeln (8) und mit einer Fördereinrichtung, insbesondere einer Förderleitung (9) für Verfüllungsmaterial, wobei die Versatzwand aus mehreren, nebeneinander angeordneten Versatzwandabschnitten (2) besteht und jeder Versatzwandabschnitt (2) separat nachziehbar und vorzugsweise höhenverstellbar ist und wobei vorzugsweise die Ausbaugestelle (3) selbstvorrückend sind und die Versatzwand nachziehbar und höhenverstellbar und durch die Spannstempel (8) zum Hangenden (12) und Liegenden (13) verspannbar ist, **dadurch gekennzeichnet,** daß jeder Versatzwandabschnitt (2) im Querschnitt U-förmig ausgebildet ist und versatzseitig offenen, sich in Rückrichtung - Arbeitsrichtung - verjüngenden Versatzraumabschnitt (14) umschließt und daß die freien Enden benachbarter Versatzwandabschnitte (2) mindestens über die Schrittlänge des Ausbaugestells (3) gleitend und dichtend aneinander anliegen und daß die Außenbreite und die maximale lichte Innenbreite der Versatzwandabschnitte (2) an den gleitend aneinander anliegenden freien Enden größer ist als im übrigen.

2. Versatzvorrichtung nach Anspruch 1, dadurch gekennzeichnet, daß jeder Versatzwandabschnitt (2) einen Stützrahmen (15) und eine am Stützrahmen (15) befestigte, der Kontur des Versatzwandabschnittes (2) entsprechende, einteilige oder mehrteilige Formplatte (17) aus elastischem Material aufweist und daß die gleitend aneinander anliegenden freien Enden der Versatzwandabschnitte (2) von den Enden der Formplatte (17) gebildet sind.

3. Versatzvorrichtung nach Anspruch 2, dadurch gekennzeichnet, daß der Stützrahmen im Querschnitt etwa U-förmig ausgebildet ist und daß die Formplatte aus elastischem Material aus zwei, lediglich die freien Enden bildenden, am Stützrahmen befestigten Teilen besteht.

4. Versatzvorrichtung nach Anspruch 2 oder 3, dadurch gekennzeichnet, daß die Außenbreite des Stützrahmens (15) etwas geringer ist als die Außenbreite der Formplatte (17) an den freien Enden und die maximale Innenbreite des Versatzwandabschnittes (2) im Bereich des Stützrahmens (15) geringer ist als an den freien Enden der Formplatte (17).

5. Versatzvorrichtung nach einem der Ansprüche 1 bis 4, dadurch gekennzeichnet, daß der Stützrahmen (15) an den Spannstempeln (8) befestigt ist.

6. Versatzvorrichtung nach einem der Ansprüche 1 bis 5, dadurch gekennzeichnet, daß jeder Versatzwandabschnitt (2) mindestens eine Öffnung (18) zur Aufnahme der Förderleitung (9) bzw. einer der Förderleitungen für Verfüllungsmaterial aufweist.

## Claims

1. An apparatus for filling cavities produced in mining, particularly in the mining of hard coal, with a filling material with a dense textural structure in its final state and high, preferably rapidly-occurring, compaction, with a continuous packing wall separating the cavity which is held open, particularly the face cavity (10), from a packing cavity (11) to be filled with filling material, preferably with stope supports (3) and bracing props (8) and with a feeder device, particularly a feed pipe (9) for filling material, wherein the packing wall consists of a plurality of packing wall sections (2) arranged side by side and each packing wall section (2) can be separately withdrawn afterwards and is preferably height-adjustable, and wherein the stope supports (3) are preferably self-advancing and the packing wall can be withdrawn afterwards and is height-adjustable and can be braced by the bracing props (8) against roofs (12) and floors (13), characterised in that each packing wall section (2) is constructed with a U-shaped cross-section and encloses the packing cavity section (14) which tapers from the return direction to the working direction and is open on the packing side, and that the free ends of adjacent packing wall sections (2) are seated sliding and sealed against each other at least over the length of the interval between the stope supports (3), and that the external width and the maximum clear internal width of the packing wall sections (2) is greater at the free ends which are seated sliding against each other than it is elsewhere.

2. A packing apparatus according to claim 1, characterised in that each packing wall section (2) has a support frame (15) and a one-piece or multi-piece moulding plate (17) made of resilient material which is fastened to the support frame (15) and which corresponds to the contour of the packing wall section (2), and that the free ends of the packing wall sections (2) which are seated sliding against each other are formed from the ends of the moulding plate (17).

3. A packing apparatus according to claim 2, characterised in that the support frame is constructed with an approximately U-shaped cross-section and that the moulding plate of resilient material consists of two parts which merely form the free ends and which are fastened to the support frame.

4. A packing apparatus according to claim 2 or 3, characterised in that the external width of the support frame (15) is somewhat less than the external width of the moulding plate (17) at its free ends, and that the maximum internal width of the packing wall section (2) in the region of the support frame (15) is less than at the free ends of the moulding plate (17).

5. A packing apparatus according to any one of claims 1 to 4, characterised in that the support frame (15) is fastened to the bracing props (8).

6. A packing apparatus according to any one of claims 1 to 5, characterised in that each packing wall section (2) has at least one opening (18) for receiving the feed pipe (9) or one of the feed pipes for filling material.

## Revendications

1. Dispositif pour le remplissage d'espaces vides construits selon la règle des mineurs, en particulier dans des mines de charbon, à l'aide d'une matière de remplissage à texture épaisse à l'état terminal et à rigidification élevée intervenant de préférence rapidement, comprenant une paroi de remblayage continue délimitant l'espace libre resté ouvert, en particulier l'espace de taille (10), par rapport à un espace de remblayage (11) qui doit être rempli à l'aide de la matière de remplissage, de préférence des chevalets de soutènement (3) et des étais de fixation (8), ainsi qu'un mécanisme de transport, en particulier un conduit de transport (9) pour la matière de remplissage, la paroi de remblayage étant constituée par plusieurs sections de parois de remplissage (2) disposées les unes à côté des autres et chaque section de paroi de remplissage (2) pouvant être retirée séparément et étant de préférence réglable en hauteur, les chevalets de soutènement (3) étant de préférence dotés d'une avance automatique et la paroi de remblayage pouvant être retirée et étant réglable en hauteur, tout en étant apte à soutenir le toit (12) et le sol (13) à l'intervention des étais de fixation (8), caractérisé en ce que chaque section de paroi de remblayage (2) est réalisée en section transversale en forme de U et entoure une section d'espace de déblayage (14) ouvert du côté du déblayage et qui se rétrécit en direction arrière - dans le sens du travail -, et en ce que les extrémités libres des sections de parois de déblayage (2) sont mutuellement adjacentes en coulissement et de manière étanche au moins sur la longueur de pas du chevalet de soutènement (3), et en ce que la largeur externe et la largeur interne maximale des sections de parois de remblayage (2) aux extrémités libres mutuellement adjacentes en coulissement sont supérieures à celles que l'on trouve ailleurs.

2. Dispositif de remblayage selon la revendication 1, caractérisé en ce que chaque section de paroi de remblayage (2) présente un cadre de soutien (15) et une plaque moulée (17) en une matière élastique en une seule pièce ou en plusieurs pièces correspondant au contour de la section de paroi de remblayage (2) fixée au cadre de soutien (15), et en ce que les extrémités libres des sections de parois de remblayage (2) mutuellement adjacentes en coulissement sont formées par les extrémités de la plaque moulée (17).

3. Dispositif de remblayage selon la revendication 2, caractérisé en ce que le cadre de soutien est réalisé à peu près en U en section transversale et en ce que la plaque moulée est constituée en une matière élastique en deux parties fixées au cadre de soutien et constituant simplement les extrémités libres.

4. Dispositif de remblayage selon la revendication 2 ou 3, caractérisé en ce que la largeur externe du cadre de soutien (15) est légèrement inférieure à la largeur externe de la plaque moulée (17) aux extrémités libres et la largeur interne maximale de la section de paroi de remblayage (2) dans la zone du cadre de soutien (15) est inférieure à celle que l'on trouve aux extrémités libres de la plaque moulée (17).

5. Dispositif de remblayage selon l'une quelconque des revendications 1 à 4, caractérisé en ce que le cadre de soutien (15) est fixé aux étais de fixation (8).

6. Dispositif de remblayage selon l'une quelconque des revendications 1 à 5, caractérisé en ce que chaque section de paroi de remblayage (2) présente au moins une ouverture (18) dans laquelle vient se loger le conduit de transport (9) ou un des conduits de transport pour la matière de remplissage.
